Europäisches Patentamt

European Patent Office

Office européen des brevets

(19)

(11) Veröffentlichungsnummer: **0 155 703 B1**

# EUROPÄISCHE PATENTSCHRIFT

(45) Veröffentlichungstag der Patentschrift: **12.06.91**

(21) Anmeldenummer: **85103418.1**

(22) Anmeldetag: **22.03.85**

(51) Int. Cl.⁵: **A23B 7/06**, A23B 7/03, A23L 1/216

(54) **Trockenkartoffelprodukte und Instant-Kartoffeln sowie Verfahren zu ihrer Herstellung.**

(30) Priorität: **23.03.84 DE 3410823**

(43) Veröffentlichungstag der Anmeldung: **25.09.85 Patentblatt 85/39**

(45) Bekanntmachung des Hinweises auf die Patenterteilung: **12.06.91 Patentblatt 91/24**

(84) Benannte Vertragsstaaten: **BE FR GB NL**

(56) Entgegenhaltungen:
EP-A- 0 089 800
FR-A- 1 257 617
FR-A- 1 518 529
GB-A- 1 233 348
US-A- 4 084 008

(73) Patentinhaber: **PFANNI-WERKE OTTO ECKART KG**
**Grafinger Strasse 6**
**W-8000 München 80(DE)**

(72) Erfinder: **Kluge, Günter, Dr.-Ing.**
**Johann-Hacklring 21**
**W-8011 Grasbrunn 1(DE)**
Erfinder: **Kalsbach, Renate**
**Breitenloh 7**
**W-8131 Farchach/Berg 2(DE)**
Erfinder: **Pepperl, Thomas, Dipl.-Ing.**
**Moosbauerweg 42**
**W-8190 Wolfratshausen(DE)**
Erfinder: **Skoppek, Hans-Peter**
**Theodor-Storm-Strasse 1**
**W-8047 Karlsfeld(DE)**

(74) Vertreter: **Patentanwälte Deufel, Hertel, Lewald**
**Postfach 26 02 47 Isartorplatz 6**
**W-8000 München 26(DE)**

## Beschreibung

Die Erfindung bezieht sich auf ein Trockenkartoffelprodukt, das einerseits gute Lagerfähigkeit hat und andererseits gegebenenfalls leicht in ein Instant-Kartoffelprodukt mit besonders guten Instanteigenschaften überführt werden kann.

Unter Instanteigenschaften ist in diesem Fall zu verstehen, daß die erfindungsgemäßen Trockenkartoffeln durch Übergießen mit heißem, insbesondere siedendem Wasser und kurzzeitigem Ziehenlassen von höchstens 5 min verzehrsfertig zubereitet sind, d.h. rehydratisiert und gegart sind.

Eine weitere Aufgabenstellung der vorliegenden Erfindung ist es, ein Produkt mit einer geeigneten Haltbarkeit zur Verfügung zu stellen, um eine kontinuierliche Marktversorgung zu gewährleisten. Instant-Produkte haben aufgrund ihrer meist porösen Struktur meist sehr große innere Oberflächen, was zur Folge hat, daß derartige Produkte anfällig sind gegenüber allen Verderbserscheinungen, insbesondere Reaktionen, die durch den Kontakt mit Luftsauerstoff hervorgerufen werden wie z.B. Ranzidität. Durch die Verwendung des 2-stufigen Verfahrens gelingt es nun, eine kontinuierliche Marktversorgung über das ganze Jahr sicherzustellen. In einer ersten Stufe wird ein Trockenkartoffelprodukt hergestellt, das eine gute Lagerstabilität aufweist und in der zweiten Stufe wird dieses Produkt gegebenenfalls in ein Instant-Kartoffel-Trockenprodukt überführt.

Es hat in der Vergangenheit nicht an Versuchen gefehlt, die zeitraubende Zubereitung von Kartoffeln durch eine entsprechende Aufbereitung der Trockenkartoffelprodukte zu verkürzen. Die bekannteste Verfahrensweise zur Herstellung von Produkten mit Instant-Charakter ist die Gefriertrocknung. Diese Arbeitsweise liefert zwar Produkte mit guten Instant-Eigenschaften, die Herstellungskosten sind allerdings außerordentlich hoch, so daß diese Arbeitsweise nur für besonders hochwertige Produkte in Frage kommt.

Aus der US-PS 4 084 008 ist ein Verfahren zur Herstellung eines Instant-Trockenkartoffelproduktes bekannt, wobei die gewaschenen, rohen Kartoffeln geschält, zerkleinert, blanchiert, auf einen Feuchtigkeitsgehalt von etwa 35-65 Gew.-% getrocknet, dann diese teilgetrockneten Kartoffeln dampfgekocht und auf einen Endwassergehalt von unter 10% fertig getrocknet werden. Diese Kartoffeln weisen recht gute Instant-Eigenschaften auf, haben aber nicht den Produktcharakter und die Konsistenzeigenschaften eines über einen Frostungsschritt hergestellten Produktes. Aus der US-PS 2 490 431 ist ein Verfahren zur Herstellung eines Kartoffelgranulates bekannt, wobei ganze Kartoffeln oder Kartoffelscheiben beispielsweise in Dampf gekocht werden, vorgekühlt, gefrostet und wieder aufgetaut werden und nach dem Zentrifugieren zu einem Granulat getrocknet werden. Ein derartiges Granulat ist beispielsweise als Trocken-Kartoffelpüree verwendbar.

Ein weiteres Verfahren zur Herstellung von Instant-Kartoffeln ist aus der US-PS 3 359 123 bekannt, bei dem ganze, ungeschälte Kartoffeln in Heißluft bis auf eine Kerntemperatur von max. 82°C gekocht werden, damit die Kartoffelzellen nicht verletzt werden. Danach werden die Kartoffeln solange bei einer Temperatur knapp unter 0°C gefrostet, bis sich eine gewünschte Cellularstruktur ausgebildet hat. Die Kartoffeln werden im gefrosteten Zustand geschält, gegebenenfalls zu einer gewünschten Form zerkleinert, gegebenenfalls in einem Wasserbad aufgetaut und dann auf einen Wassergehalt unter 10% getrocknet. Aus den erhaltenen Produkten lassen sich beispielsweise Salzkartoffeln, Baked Potatoes oder Pommes Frites zubereiten.

Gemäß FR-A-1518529 werden wie üblich gewaschene rohe geschälte und in Scheiben geschnittene Kartoffeln zweimal wasserblanchiert, wobei das zweite Wasserblanchieren mit heftig kochendem Wasser erfolgt. Dann wird getrocknet und schließlich schnell eingefroren.

Ziel der Erfindung ist nun ein Verfahren zur Herstellung eines Trockenkartoffelproduktes, das leicht in ein Instant-Trockenkartoffelprodukt überführt werden kann. Das Verfahren zur Herstellung eines Trockenkartoffelproduktes durch Zerkleinerung der gewaschenen und geschälten rohen Kartoffeln, Blanchieren und Trocknen auf einen Wassergehalt von höchstens 11 Gew.-%, besteht darin, daß die Blanchierung zweistufig erfolgt, wobei in einer ersten Stufe * wasserblanchiert und anschließend in einer zweiten Stufe bei 100°C mit Sattdampf 2 bis 5 Minuten dampfblanchiert wird und die blanchierten Kartoffelstückchen in einem Trockner bei einer Temperatur von 115°C am Trockneranfang, abfallend bis auf 60°C zum Trocknerende hin, getrocknet und gegebenenfalls auf ein Instantprodukt weiterverarbeitet werden.

Die Weiterverarbeitung zur Herstellung eines Instant-Trockenkartoffelproduktes aus einem Produkt aus zerkleinerten, blanchierten und getrockneten Kartoffeln, das wie oben beschrieben erhalten ist, durch Behandeln mit Feuchtigkeit und Hitze und abermals Trocknen, besteht darin, daß die wie oben beschrieben, erhaltenen Trockenkartoffelstückchen bei 70 bis 90°C 15 bis 20 min rehydratisiert und wasserblanchiert werden, die aus dem

*kartoffelsortenabhängig 1 bis 3 Minuten bei einer Temperatur im Bereich zwischen 85°C und 100°C

Blancheur entnommenen Kartoffelstückchen in einer Schichtdicke von mindestens 10 cm ca. 1/2 h oder bis ihre Temperatur auf ca. 50°C gesenkt ist ruhen und die Kartoffelstückchen anschließend auf eine Temperatur von nicht tiefer als -7°C gefrostet und während einer Verweilzeit von einer 1/2 bis 10 h unter Frostung gehalten werden, dann einem Trockner zugeführt und dann am Trockneranfang bei wenig über Zimmertemperatur liegenden Temperaturen getrocknet werden und gegen das Trocknerende hin die Trocknungstemperatur bis auf 70°C erhöht wird und die Kartoffelstückchen solange getrocknet werden, bis der Wassergehalt bei unter 11 Gew.-% liegt, wobei vorzugsweise auf unter 9 Gew.-% getrocknet wird.

Weiteres Ziel der Erfindung ist das so erhältliche Trockenkartoffelprodukt und Instant-Trockenkartoffelprodukt, das aufgrund seiner Herstellungsweise als neue Substanz zu betrachten ist.

Bei der ersten Blanchierstufe liegt die Temperatur des Blanchierwassers im Bereich zwischen 85 und 100°C und die Dampfblanchierung erfolgt unter atmosphärischen Bedingungen mit Sattdampf. Das Trockenkartoffelprodukt wird vorzugweise auf einen Wassergehalt von 9 - 11 Gew.-% getrocknet.

Bevorzugte Maßnahmen bei der Herstellung des Instant-Trockenkartoffelproduktes sind, daß die Rehydratisierung und Blanchierung der Trockenkartoffeln in einem Trommelblancheur erfolgt, daß das Frosten der Kartoffelstückchen erfolgt, in dem diese nach dem Einfriervorgang für eine Verweilzeit von 1 - 7 h in einem Temperaturbereich von -2 - -5°C verbleiben, daß das Einfrieren der Kartoffelstückchen in einem Wirbelschichtfroster erfolgt, daß die Kartoffelstückchen während der Verweilzeit unter Frost gehalten werden, indem das Produkt in dicker Schicht (mindestens 10 cm) langsam durch einen Kühltunnel geführt und dieser gleichzeitig mit der Abluft des Wirbelschichtfrosters beschickt wird und daß die Kartoffelstückchen nach dem Frostungsschritt einem Bandtrockner zugeführt und dort in einer Schichtdicke von 4 bis 12 cm getrocknet werden, wobei die Temperatur am Trockneranfang 30 bis 40°C und die Trocknungsdauer je nach Größe der Kartoffelstückchen 3 bis 5 h beträgt. Der bevorzugte Endwassergehalt ist 5 - 9, insbesondere 5 - 7 Gew.-%.

In der Praxis wird wie folgt gearbeitet:
Kartoffeln werden gewaschen, geschält und zu Streifen, Scheiben oder Würfel geschnitten. Die erhaltenen Kartoffelstückchen werden in einer ersten Stufe wasserblanchiert, wobei gegebenenfalls dem Blanchierwasser in bekannter Weise Natriumhydrogensulfit zugesetzt werden kann, um eine Verfärbung zu verhindern. Die Temperatur des Blanchierwassers kann im Bereich zwischen 85°C und 100°C liegen, die übliche Blanchierdauer liegt kartoffelsortenabhängig bei 1 - 3 min. Bekanntlich ist bei der Blanchierdauer nicht nur Form und Größe der zu blanchierenden Kartoffelstückchen, sondern oft auch der Stärkegehalt und andere sortenabhängige Merkmale zu berücksichtigen. Die richtige Blanchierdauer kann bei einer bestimmten vorgewählten Temperatur leicht durch wenige Versuche ausprobiert werden.

An diesen Wasserblanchierschritt schließt sich nun eine Dampfblanchierung an. Die Dampfblanchierung erfolgt unter atmosphärischem Bedingungen, also bei 100°C, was bedeutet, daß Sattdampf vorliegt. Die Durchlaufzeiten bei der Dampfblanchierung liegen zwischen 2 und 5 min. Diese feuchte Dampfblanchierung hat wesentliche Vorteile gegenüber der in der US-PS 3 359 123 beschriebenen Trockenblanchierung von ganzen, ungeschälten Kartoffeln, da beim industriellen Schälen von gekochten Kartoffeln sehr hohe Produktverluste auftreten und außerdem beim Dampfblanchieren gegenüber dem Heißluftblanchieren ein wesentlich besserer Wärmeübergang erreicht wird, so daß wesentlich kürzere Blanchierzeiten erforderlich sind.

Die blanchierten Kartoffelstückchen werden nun auf einem Bandtrockner bei einer Temperatur von 115°C abfallend auf etwa 60°C zum Trocknerende hin auf einen Endwassergehalt von höchstens 11 Gew.-% Wasser, insbesondere 9 - 11 % getrocknet. Die Trocknungsdauer beträgt je nach Größe der Kartoffelstückchen 2 - 4 Stunden.

Die erhaltenen Trockenkartoffelstückchen können nun als Ausgangsprodukt zur Herstellung von Instant-Trockenkartoffeln direkt weiterverarbeitet werden oder zwischengelagert und bei Bedarf zur Instant-Kartoffel weiterverarbeitet werden. Dies hat den großen Vorteil, daß man große Produktlinien für das Trockenkartoffelprodukt einrichten und nach der Kartoffelernte große Mengen schnell verarbeiten kann und das erhaltene Produkt dann über das ganze Jahr hinweg eine gleichmäßige Versorgung für die Weiterverarbeitung, z.B. zu Instant-Kartoffeln, gestattet.

Die wie oben beschrieben hergestellten Trockenkartoffeln werden zur Erzielung von Instant-Trockenkartoffeln wieder rehydratisiert und blanchiert. Die Blanchierung erfolgt bei 70 - 90°C mit Wasser, zweckmäßig in einem Trommelblancheur. Die Blanchierdauer schwankt je nach Größe und Form der Kartoffelstückchen und beträgt im allgemeinen 15 - 25 min, insbesondere 16 - 22 min. Das Blanchierwasser kann in bekannter Weise Natriumhydrogensulfit zur Vermeidung von Verfärbungen enthalten. Daneben kann das Blanchierwasser zur Verbesserung der sensorischen Eigenschaften der Kartoffeln noch Salz und/oder andere Geruchs- und Geschmacksstoffe enthalten.

Die rehydratisierten und blanchierten Kartoffelstückchen, die den Blancheur verlassen, verweilen nun in dicker Schicht von mindestens 10 cm ca. 1/2 Stunde auf einem Förderband. Ziel dieser Verweilzeit ist das Abdampfen der Kartoffelstückchen sowie die Temperaturabsenkung der Kartoffelstückchen auf ca. 50°C. Außerdem ergibt sich während dieser Verweilzeit ein gewisser Nachquelleffekt sowie ein Feuchtigkeitsausgleich, so daß die Kartoffelstückchen am Ende der Verweilzeit vollständig gequollen sind und eine gleichmäßige Feuchtigkeitsverteilung über den Querschnitt aufweisen.

Die Verweilzeit von 1/2 h soll also nicht unterschritten werden. Wenn dann die Temperatur noch über 50°C liegt, kann die Verweilzeit auch länger sein.

Im Anschluß an diese Verweilzeit werden die Kartoffeln gefrostet. Die Zielsetzung des Gefriervorganges ist das Frosten der Kartoffelstückchen bis auf eine Temperatur von nicht mehr als -7°C. (da der tatsächliche Gefrierpunkt solcher Kartoffeln bei etwa -1,7°C liegt, liegt der Bereich für das Frosten zwischen dem tatsächlichen Gefrierpunkt und einer Tiefsttemperatur von -7°C). Im Anschluß an den Einfriervorgang verbleiben die Kartoffelstückchen vorzugsweise für einen Zeitraum von 1 -7 h in einem Temperaturbereich von -2°C - -5°C. In diesem Temperaturbereich knapp unter dem Gefrierpunkt laufen Rekristallisationsvorgänge der Stärke ab, die zur Folge haben, daß das Produkt bei der nachfolgenden Trocknung keine Schrumpfungserscheinungen zeigt, so daß sich eine poröse Cellularstruktur ausbilden kann. Das Einfrieren der Kartoffelstückchen erfolgt vorzugsweise mit Hilfe eines Wirbelschichtfrosters. Die Kartoffelstückchen werden während des Einfriervorganges ständig in Bewegung gehalten, so daß die Stückchen den Froster als diskrete gefrostete Teilchen verlassen. Die gefrosteten Kartoffelstückchen werden dann vorzugsweise in dicker Schicht auf einem Bandfroster aufgegeben und verbleiben für den Zeitraum von 1 - 7 Stunden im Temperaturbereich von -2°C bis -5°C. Der Bandfroster wird vorzugsweise mit der Abluft des Wirbelschichtfrosters gekühlt.

Die Schichtdicke auf dem Frosterband soll mindestens ca. 4 cm betragen, kann aber bedeutend größer sein als 12 cm, z.B. 20 - 30 cm, je nach Frosterkapazität. Wenn im Wirbelschichtfroster eingefroren wird, wird vorzugsweise eine Schichtdicke von mindestens 10 cm, häufig mindestens 20 cm im Kühltunnel angewandt.

Das Frosten der Teilchen kann aber auch auf einem gewöhnlichen Bandfroster erfolgen, der beispielsweise mit $CO_2$ oder Stickstoff oder mit einer Kompressionskälteanlage gekühlt wird. Beim Gefrieren auf einem Bandfroster entstehen im allgemeinen feste Eisblöcke, so daß es unter Umständen notwendig ist, den tiefgefrorenen Block aus Kartoffelteilchen durch entsprechende Vorrichtungen zu zerkleinern. Um das Zerkleinern zu erleichtern wird hier vorzugsweise eine Schichtdicke von 12 cm nicht überschritten. Nach Beendigung des Frostungschrittes werden die Kartoffelstückchen einem Bandtrockner zugeführt. Das Trocknerband wird in relativ dicker Schicht (5 - 12, insbesondere 10 - 12 cm) belegt und im ersten Trocknungsabschnitt bei sehr niedrigen Temperaturen, vorzugsweise 30 - 40°C, getrocknet. Die Trocknungstemperatur steigt zum Trocknungsende hin bis auf 70°C an. Die Trocknungsdauer beträgt je nach Größe der Kartoffelteilchen 3 - 5 Stunden, der Endwassergehalt liegt vorzugsweise bei < 9%.

Die so erhaltenen Kartoffelstückchen können beispielsweise durch Übergießen mit kochendem Wasser in 5 min in einen verzehrsfertigen Zustand Überführt werden.

Beispiel

Kartoffeln der Sorte Desiree werden gewaschen, geschält und mittels einer Schneidvorrichtung zu Flachwürfeln von der Größe 12 x 12 X 4 mm geschnitten.

Die Flachwürfel werden in der ersten Blanchierstufe bei 92°C 2 min lang in Wasser blanchiert.

In einer zweiten Stufe werden die Flachwürfel 3,5 min lang in strömendem Dampf (100°C) blanchiert. Das Blanchierwasser der ersten Stufe enthält ca. 0,3% bezogen auf die Wassermenge Natriumhydrogensulfit.

Die blanchierten Kartoffelwürfel werden auf einem Bandtrockner in 2,5 Stunden auf einen Endwassergehalt von 9,5% getrocknet. Die Temperatur des Trockners beträgt am Trocknereinlauf 115°C und fällt bis hin zum Trocknerauslauf auf 60°C ab.

Die erhaltenen Trockenkartoffelwürfel werden nun in einem Trommelblancheur bei 80°C 19 min lang in Wasser blanchiert. Nach dem Austritt aus dem Blancheur verweilen die rehydratisierten Kartoffelwürfel ca. 30 min in dicker (ca. 20 cm) Schicht auf einem langsam laufenden Förderband, wo sie abdampfen und nachquellen. Die Temperatur vor der Aufgabe auf den Froster beträgt 50°C.

Die abgedampften Würfel werden auf einen $CO_2$-Bandfroster von ca. 50 cm Breite in einer Schichthöhe von 4 cm aufgegeben. Der Bandfroster ist auf eine Temperatur von -12°C eingestellt, die Durchlaufzeit beträgt 16 min. Beim Austritt aus dem Bandfroster haben die Würfel eine Temperatur von -5°C. Die Würfel werden nun für 3 Stunden in einen Kühlraum eingelagert, dessen Temperatur auf -4°C eingestellt ist. Nach dieser Verweilzeit werden die gefrosteten Würfel auf einen Bandtrockner aufgegeben und bei einer Temperatur von 30°C ansteigend bis auf 70°C auf einen Endwassergehalt von < 9% getrocknet.

Beim Einfrieren im Wirbelschichtfroster und anschließendem Frosten auf einem Bandfroster wird je nach Kapazität des Frosters eine Schichtdicke von mindestens 10 cm, vorzugsweise 20 - 30 cm angewandt.

Die so hergestellten Instant-Trockenwürfel eignen sich ausgezeichnet als Suppeneinlage, die lediglich durch Übergießen mit kochendem Wasser und 5-minütigem Ziehenlassen in den verzehrsfertigen Zustand überführt wird.

## Ansprüche

1. Verfahren zur Herstellung eines Trockenkartoffelproduktes durch Zerkleinerung der gewaschenen und geschälten rohen Kartoffeln, Blanchieren und Trocknen auf einen Wassergehalt von höchstens 11 Gew.-%, dadurch gekennzeichnet, daß die Blanchierung zweistufig erfolgt, wobei in einer ersten Stufe kartoffelsortenabhängig 1 bis 3 Minuten bei einer Temperatur im Bereich zwischen 85°C und 100°C wasserblanchiert und anschließend in einer zweiten Stufe bei 100°C mit Sattdampf 2 bis 5 Minuten dampfblanchiert wird und die blanchierten Kartoffelstückchen in einem Trockner bei einer Temperatur von 115°C am Trockneranfang, abfallend bis auf 60°C zum Trocknerende hin, getrocknet und ggfs. auf ein Instantprodukt weiterverarbeitet werden.

2. Verfahren zur Herstellung eines Instant-Trockenkartoffelproduktes aus einem Produkt aus zerkleinerten, blanchierten und getrockneten Kartoffeln, das gemäß Anspruch 1 erhalten ist durch Behandeln mit Feuchtigkeit und Hitze und abermals Trocknen, dadurch gekennzeichnet, daß die gemäß Anspruch 1 erhaltenen getrockneten Kartoffelstückchen bei 70 bis 90°C 15 bis 25 Minuten rehydratisiert und wasserblanchiert werden, die aus dem Blancheur entnommenen Kartoffelstückchen in einer Schichtdicke von mindestens 10 cm ca. 1/2 h oder bis ihre Temperatur auf ca. 50°C gesenkt ist, ruhen und die Kartoffelstückchen anschließend auf eine Temperatur von nicht tiefer als -7°C gefrostet und während einer Verweilzeit von einer 1/2 bis 10 h unter Frostung gehalten werden, dann einem Trockner zugeführt und dann am Trockneranfang bei wenig über Zimmertemperatur liegenden Temperaturen getrocknet werden und gegen das Trocknerende hin die Trocknungstemperatur bis auf 70°C erhöht wird und die Kartoffelstückchen solange getrocknet werden, bis der Wassergehalt bei unter 11 Gew.-% liegt.

3. Verfahren nach Anspruch 2, dadurch gekennzeichnet, daß das Einfrieren der Kartoffelstückchen in einem Wirbelschichtfroster erfolgt.

4. Verfahren nach Anspruch 2 oder 3, dadurch gekennzeichnet, daß das Frosten der Kartoffelstückchen erfolgt, indem diese nach dem Einfriervorgang für eine Verweilzeit von 1 - 7 h in einem Temperaturbereich von -2°C bis -5°C verbleiben.

5. Verfahren nach Anspruch 3, dadurch gekennzeichnet, daß die Kartoffelstückchen während der Verweilzeit unter Frost gehalten werden, indem das Produkt in einer Schichtdicke von mindestens 10 cm langsam durch einen Kühltunnel geführt wird und dieser gleichzeitig mit der Abluft des Wirbelschichtfrosters beschickt wird.

6. Verfahren nach einem der Ansprüche 2, 3, 4 oder 5, dadurch gekennzeichnet, daß die Kartoffelstückchen nach dem Frostungsschritt einem Bandtrockner zugeführt und dort in einer Schichtdicke von 4 - 12 cm getrocknet werden, wobei die Temepratur am Trockneranfang 30 bis 40°C beträgt.

7. Trockenkartoffelprodukt, das erhältlich ist durch Zerkleinerung der gewaschenen und geschälten rohen Kartoffeln, Blanchieren und Trocknen auf einen Wassergehalt von höchstens 11 Gew.-%, dadurch gekennzeichnet, daß die Blanchierung zweistufig erfolgt ist, wobei in einer ersten Stufe kartoffelsortenabhängig 1 bis 3 Minuten bei einer Temperatur im Bereich zwischen 85°C und 100°C wasserblanchiert und anschließend in einer zweiten Stufe bei 100°C mit Sattdampf 2 bis 5 Minuten dampfblanchiert wird und die blanchierten Kartoffelstückchen in einem Trockner bei einer Temperatur von 115°C am Trockneranfang, abfallend bis auf 60°C zum Trocknerende hin, getrocknet wurden, wobei dieses Produkt gewünschtenfalls auf ein Instant-Trockenkartoffelprodukt weiterverarbeitbar ist.

8. Instant-Trockenkartoffelprodukt, aus einem Produkt aus zerkleinerten, blanchierten und getrockneten Kartoffeln gemäß Anspruch 7, das erhältlich ist durch Behandeln mit Feuchtigkeit und Hitze und abermals Trocknen, dadurch gekennzeichnet, daß das trockene Kartoffelprodukt gemäß Anspruch 7 bei 70 bis 90°C 15 bis 25 Minuten rehydratisiert und wasserblanchiert ist, die aus dem Blancheur entnommenen Kartoffelstückchen in einer Schichtdicke von mindestens 10 cm ca. 1/2 h oder bis ihre Temperatur auf ca. 50°C gesunken ist, ruhten und die Kartoffelstückchen anschließend auf eine Temperatur von tiefer als -7°C gefrostet und während einer Verweilzeit von 1/2 bis 10 h unter Frostung gehalten wurden, dann einem Trockner zugeführt und dann am Trockneranfang bei wenig über Zimmertemperatur liegenden Temperaturen getrocknet wurden und gegen das Trocknerende hin die Trocknungstemperatur bis auf 70°C erhöht wurde und die Kartoffelstückchen solange getrocknet wurden, bis der Wassergehalt bei unter 11 Gew.-% liegt.

## Claims

1.  Process for preparation of a dry potato product by cutting up the washed and peeled raw potatoes, blanching and drying to a water content of at most 11% by weight, characterised in that the blanching is carried out as two steps, the pieces of potato being water-blanched at a temperature in the range between 85°C and 100°C for 1 to 3 minutes in a first step, independently of the type of potato, and then steam-blanched for 2 to 5 minutes at 100°C using saturated steam in a second step, and the blanched pieces of potato being dried in a dryer at a temperature of 115°C at the start of drying, falling to 60°C at the end of drying and, if desired, further processed to give an instant product.

2.  Process for preparation of an instant dry potato product from a product consisting of cut-up, blanched and dried potatoes, which is obtained according to Claim 1 by treating with moisture and heat and drying once more, characterised in that the dried pieces of potato obtained according to Claim 1 are rehydrated at 70 to 90°C for 15 to 25 minutes and water-blanched, the pieces of potato taken out of the blancher are stood in a layer at least 10 cm thick for about 1/2 h or until their temperature has fallen to about 50°C, and the pieces of potato are then frozen at a temperature of not less than -7°C and kept below freezing for a residence time of 1/2 to 10 h, then added to a dryer and then dried at temperatures a little above room temperature at the start of the drying, and the drying temperature is increased to 70°C at the end of drying and the pieces of potato are dried until the water content is less than 11% by weight.

3.  Process according to Claim 2, characterised in that the freezing of the pieces of potato is carried out in a fluidized bed freezer.

4.  Process according to Claim 2 or 3, characterised in that the freezing of the pieces of potato is carried out by these remaining in a temperature range from -2°C to -5°C for a residence time of 1-7 h, according to the freezing process.

5.  Process according to Claim 3, characterised in that the pieces of potato are kept below freezing during the residence time by passing the product slowly through a cooling tunnel in a layer at least 10 cm thick and simultaneously subjecting this to the waste air from the fluidized bed freezer.

6.  Process according to one of Claims 2, 3, 4 or 5, characterised in that the pieces of potato are fed to a belt dryer after the freezing step and dried there in a layer 4-12 cm thick, the temperature at the start of drying being 30 to 40°C.

7.  A dry potato product which can be obtained by cutting up the washed and peeled raw potatoes, blanching and drying to a water content of at most 11% by weight, characterised in that the blanching is carried out as two steps, the pieces of potato being water-blanched at a temperature in the range between 85°C and 100°C in a first step, independently of the type of potato, and then steam-blanched for 2 to 5 minutes at 100°C using saturated steam in a second step, and the blanched pieces of potato being dried in a dryer at a temperature of 115°C at the start of the drying, falling to 60°C at the end of drying, it being possible for this product to be further processed, if desired, to an instant dry potato product.

8.  Instant dry potato product, from a product composed of cut-up, blanched and dried potatoes according to Claim 7, which can be obtained by treating with moisture and heat and drying once again, characterised in that the dry potato product according to Claim 7 is rehydrated and water-blanched at 70 to 90°C for 15 to 25 minutes, the pieces of potato taken out of the blancher are laid in a layer at least 10 cm thick for 1/2 h or until their temperature has fallen to about 50°C, and the pieces of potato are then frozen at a temperature of less than -7°C and kept below freezing for a residence time of 1/2 to 10 h, then added to a dryer and then dried at temperatures a little above room temperature at the beginning of drying, and the drying temperature is increased to 70°C at the end of drying and the pieces of potato are dried until the water content is below 11% by weight.

**Revendications**

1. Procédé de fabrication d'une denrée à base de pomme de terre séchée par broyage des pommes de terre crues, lavées et épluchées, blanchiment et séchage jusqu'à une teneur en eau de 11% en poids au maximum, caractérisé en ce que le blanchiment est effectué en deux étapes, au cours d'une première étape, les pommes de terre, indépendamment de leur type, sont blanchies à l'eau pendant 1 à 3 minutes à une température comprise entre 85°C et 100°C et sont ensuite, au cours d'une deuxième étape, blanchies à 100°C à la vapeur saturée pendant 2 à 5 minutes et les flocons de pommes de terre blanchis sont séchés dans un séchoir à une température de 115°C à l'entrée du séchoir, s'abaissant à 60°C à la sortie du séchoir, et éventuellement transformés en une denrée instantanée.

2. Procédé de fabrication d'une denrée instantanée à base de pomme de terre séchée à partir d'un produit constitué de pommes de terre broyées, blanchies et séchées, qui est obtenu selon la revendication 1, par traitement à l'humidité et à la chaleur et séchage renouvelé, caractérisé en ce que les flocons de pommes de terre séchés, obtenus selon la revendication 1, sont réhydratés et blanchis à l'eau à 70-90°C pendant 15 à 25 minutes, les flocons de pommes de terre prélevés du blanchiment sont laissés reposer selon une couche d'épaisseur d'au moins 10 cm pendant environ 1/2 heure ou jusqu'à ce que leur température ait baissé à environ 50°C, et les flocons de pommes de terre sont ensuite congelés à une température non inférieure à -7°C et sont maintenus congelés pendant une durée de 1/2 à 10 heures, sont ensuite amenés à un séchoir et sont ensuite séchés à des températures légèrement supérieures à la température ambiante à l'entrée du séchoir et, à l'extrémité du séchoir, la température de séchage est élevée à 70°C et les flocons de pommes de terre sont séchés jusqu'à ce que leur teneur en eau soit inférieure à 11% en poids.

3. Procédé selon la revendication 2, caractérisé en ce que la congélation des flocons de pommes de terre s'effectue dans un congélateur à couche turbulente.

4. Procédé selon la revendication 2 ou 3, caractérisé en ce que la congélaton des flocons de pommes de terre s'effectue pendant que ceux-ci sont maintenus après l'opération de congélation pendant une durée de 1-7 heures à une température comprise entre -2°C et -5°C.

5. Procédé selon la revendication 3, caractérisé en ce que les flacons de hommes de terre sont maintenus à l'état congelé durant le temps de séjour, tandis que le proest déplacé en une couche d'épaisseur d'au moins 10 cm lentement à travers un tunnel de refroidissement et celui-ci est balayé simultanément par l'air d'évacuation du congélateur à couche turbulente.

6. Procédé selon l'une quelconque des revendications 2,3,4 ou 5, caractérisé en ce que les flocons de pommes de terre sont amenés après l'opération de congélation à un séchoir à bande et y sont séchés selon une couche d'épaisseur de 4-12 cm, la température à l'entrée du séchoir s'élevant à 30 à 40°C.

7. Denrée à base de pomme de terre séchée, qui est otenue par broyage blanchiment et séchage des pommes de terre crues lavées et épluchées jusqu'à une teneur en eau de 11% en poids au maximum, caractérisé en ce que le blanchiment s'effectue en deux étapes, au cours d'une première étape, la denrée est blanchie à l'eau indépendamment du type de pomme de terre pendant 1 à 3 minutes à une température comprise entre 85°C et 100°C et ensuite est blanchie à la vapeur, au cours d'une seconde étape, à 100°C à la vapeur saturée pendant 2 à 5 minutes, et les flocons de pommes de terre blanchis sont séchés dans un séchoir à une température de 115°C à l'entrée du séchoir, s'abaissant à 60°C à l'extrémité du séchoir, cette denrée pouvant éventuellement être transformée en une denrée instantanée à base de pomme de terre séchée.

8. Denrée instantanée à base de pomme de terre séchée, obtenue à partir d'un produit à base de pommes de terre broyées, blanchies et séchées selon la revendication 7, qui est obtenu par traitement à l'humidité et chaleur et séchage renouvelé, caractérisée en ce que la denrée à base de pomme de terre séchée selon la revendication 7 est réhydratée et blanchie à l'eau à 70-90°C pendant 15 à 25 minutes, les flocons de pommes de terre prélevés après blanchiment ayant été reposés selon une couche d'épaisseur d'au moins 10 cm pendant environ 1/2 heure ou jusqu'à ce que leur température ait baissé à environ 50°C et les flocons de pommes de terre ayant été ensuite congelés à une température inférieure à -7°C et aient été maintenus congelés pendant une durée de 1/2 à 10 heures, amenés ensuite à un séchoir et ayant été ensuite sèchés à l'entrée du séchoir à des températures légèrement supérieures à la température ambiante et, à l'extrémité du séchoir, la température de séchage ayant été élevée à 70°C et les flocons de pommes de terre ayant été séchés jusqu'à ce que leur teneur en eau soit inférieure à 11% en poids.